# EUROPEAN PATENT SPECIFICATION

(11) **EP 0 489 678 B1**
(45) Date of publication and mention of the grant of the patent: **17.04.2002**
(21) Application number: 91610094.4
(22) Date of filing: 05.12.1991
(51) Int. Cl.: B08B 3/02, F16K 5/06

(54) **Cleaning equipment**
Reinigungsgerät
Equipement de nettoyage

(30) Priority: 05.12.1990 DK 289790; 25.01.1991 DK 14191
(43) Date of publication of application: 10.06.1992
(73) Proprietor: SCANIO FLOW-EQUIPMENT A/S, DK-9100 Aalborg (DK)
(72) Inventor: Gulstad, Frank Ronfeldt, DK-9220 Aalborg SO (DK); Pedersen, Villy Leenhardt, DK-9490 Pandrup (DK)
(74) Representative: Pedersen, Soeren Skovgaard

(56) References cited:
- EP-A- 0 144 047
- DE-A- 3 307 956
- DE-C- 3 902 252
- US-A- 2 571 575
- US-A- 3 429 508
- US-A- 4 714 092

## Description

The invention relates to a cleaning equipment, switchable between washing operation for washing with tap water and foam application with cleaning agent mixed with the water via an injector system, and having interchangeable nozzles for the various operations connected to the equipment by a hose.

Such equipment is generally known.

There is known low-pressure cleaning equipment in the nature of mobile and stationary equipment, e.g. for cleaning walls and floors in factories, production equipment, and their transport systems such as transport carriages, transport boxes, containers, moulds etc. and which also can be used for internal and external cleaning of vehicles. The equipment is remarkable for operating at low-pressure, e.g. in the range of 22 bar compared with high-pressure equipment.

The stationary installations comprise a master station and a number of satellite stations, or only a master station. The master station receives its water supply from the sanitary installation and comprises a centrifugal pump to increase the water pressure. From the master station the water is distributed to the satellite stations via a pipe installation. The individual stations including the master station are supplied with compressed-air from an existing compressed-air equipment or a compressor to the specific purpose.

The master station and the satellite stations comprise a three-way valve for changing between washing operation and foam operation or disinfection. During washing operation a large flow of water under high pressure is led directly to the hose connection of the station. During foam operation the three-way valve is set, such that the water is led to an injector having a hose connection for a suction hose, which is slipped into a container containing a cleaning agent. The injector sucks some cleaning agent from the container for mixing with the water, and to the mixture is added compressed-air for foaming purposes. Disinfection is carried out in a similar manner by suction of disinfectant from a container, but without the adding of compressed-air afterwards.

Cleaning is initiated by turning on the water by a valve next to the station, likewise the three-way valve is changed from the closed position to the washing position. In advance the hose has been connected to the station and the gun equipped with a washing nozzle. Washing is carried out moving away from the station. At changing to foam operation one must go back to the station for setting the three-way valve in position for foam operation. The route back to the station can be inconvenient as the way leads through production equipment and pipe installations. Thus the same distance is covered twice, whereas once would suffice, if an optional change between washing operation and foam operation independently of the position in relation to the station could be performed.

According to the present invention it is recognized that the valve arrangement can be simplified to a great extent and at the same time providing possibility for changing between washing operation and foam operation or vice versa independently of the position in relation to the station. This is achieved by a simple injector system, consisting of a change-over valve with a rotary-symmetrical valve body in the flow passage of the valve housing, said valve body having two crossing channels, one having a relatively large cross section, and constitutes the washing channel, while the other has a minor cross section, and constitutes the injector channel, and the valve body being rotatable between a position where the washing channel is in alignment with the flow passage of the valve housing for delivering water without additives, and a transverse position, where the washing channel is in connection with an adding intake in the side of the valve housing for intake of adding agents, and where the injector channel is in alignment with the flow passage of the valve housing for procuring of an injection for suction of adding agents and mixing thereof into the water.

When the washing channel is in its washing operation position, the velocity of the water flow will be relatively low, such that it does not cause any injection effect, while such effect will occur in the other position, where the narrower injection channel cooperates with the valve inlet. As the water pressure remains the same, the velocity of the water flow through the narrower channel will increase remarkably, namely sufficiently to create a low pressure in the washing channel, which is in its transverse position, and through which additives can now be sucked from the side inlet.

According to the invention a three-way valve and a special injection unit can be replaced by a simple tap-valve with an extra inlet in the side; this is a very appreciable simplification.

To prevent water from running out through the additive inlet during washing operation, there can be placed a check valve therein, preferably unified with the valve. The injection effect is optimum when the injection channel at one side of the washing channel has a larger cross section than the part of the injection channel at the other side of the washing channel. The wider part of the injection channel constitutes the injector outlet and the narrower part the injector inlet. The injector outlet is adapted to the increased liquid flow in consequence of the addition of cleaning agent/disinfectant to the water flow. The larger outlet area also results in a self cleaning effect, in case any residue is left in the opening after completing the foam application/disinfection. At restart the residue will be washed away.

It is noticed that the valve body can be ball shaped, cylindrical, truncated or have a similar rotary symmetrical shape.

As previously indicated the simplification of the valve arrangement allows the optional switch-over at the hose end from washing operation to foam application or vice versa irrespective of the operator's position in relation to the master station. This is achieved according to the invention by a pressure or flow sensor, which senses the pressure or flow difference at interchange between washing nozzle and foam applicator and having a connection to the change-over valve. Hereby one can freely switch between washing operation and foam application just by interchange between the washing nozzle and the foam applicator. When switching to disinfection it is necessary anyway to return to the station to change to a container containing disinfectant, thus compressed air admission can manually be turned off at the station panel.

The invention is explained in further detail in the following, with reference to the accompanying drawing, in which:-
Fig. 1 is a vertical longitudinal section of a valve according to the invention, shown in its washing position;
Fig. 2 is a horizontal longitudinal section of the valve shown in its washing position;
Fig. 3 is also a horizontal longitudinal section, but with the valve member shown in its disinfection position and with a hose connector;
Fig. 4 is a schematical view of a first embodiment for automatic changes between the various modes of the cleaning equipment;
Fig. 5 is a schematical view of the principle of a specially designed limiter valve for limiting the liquid flow;
Fig. 6 is a more detailed view of a second embodiment for automatic change between the various modes;
Fig. 7 is a view of a specific embodiment of the limiting valve in connection with the changing valve in Figs. 1-3;
Fig. 8 is an enlarged longitudinal section of the limiting valve in Fig. 7;
Fig. 9 is a view of a second embodiment of the limiting valve in connection with the changing valve in Figs. 1-3;
Fig. 10 is a view of third embodiment for automatic change between the various modes;
Fig. 11 is a view of a fourth and different embodiment for automatic change between the various modes of the equipment.

The valve shown can be of the ball-valve type, having a valve housing 2 with an inlet 4 and an outlet 6. In the side of the valve housing there is a hose connection 8, having an incorporated check valve 10. Further the valve has an operating handle 12, which can be set in two different operative positions, namely in alignment with and transversely to the flow direction between the inlet and outlet 4,6 respectively.

The valve element 14 is designed with a wide washing channel 16, which is the primary flow passage of the valve, through which the valve is fully open for flow during washing operation, and with a secondary injector channel 18 transversely thereto and having a narrow channel part 20 at one side of the washing channel 16 and a wider channel part 22 at the other side of the washing channel.

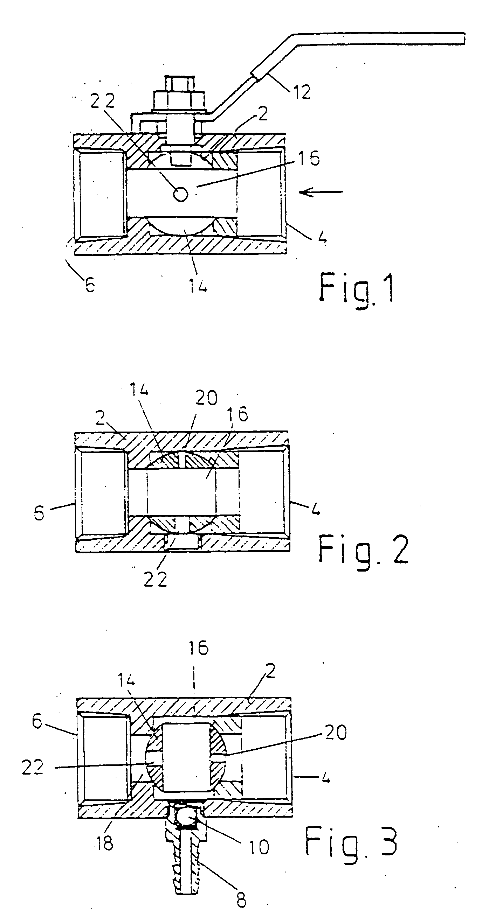

In Figs. 1 and 2 the valve element 14 is shown in dotted lines in the position, where the channel 16 is in alignment with the inlet 4 and the outlet 6. In this position the injector channel 18 is open towards the side inlet 8, but as the water flow is relatively low through the wide washing channel 14, no injection effect will be generated, and besides at the injector side a check valve 10 is incorporated, such that no outpressing of the flow water through the hose connector 8 occurs neither.

In Fig. 3 the valve element 14 is shown in its transverse position, where the narrow channel part 20 is situated in front of the valve inlet 4, whereas the broader part 22 is facing the valve outlet 6. The broad washing channel 16 is now in its transverse position and is open towards the narrow side spout 8. At the inlet 4 the water will flow through the narrow channel part 20 with highly increased velocity, which results in a low pressure at the spout of this channel part in the washing channel 16, and this results in suction from the injector side via the hose connection 8. The water and the injected liquid are spouted out through the broader channel part 20 to the valve outlet 6, and the valve now operates as an injector unit.

It is realized that the unit shown is remarkable not only by a very simple mechanical construction, but also operational with a very effective mixing of the injection medium, and thus it appears to be an operational advantage, that the injection takes place through a relatively large space at the spout of the narrower channel part 20.

During use of the washing channel 16 it is insignificant whether it is the narrower or the broader part of the injection channel 18, which is facing the side spout 8.

In the following examples of stationary low-pressure cleaning installations will be described having a master station and satellite stations based on the above described valve, and with utilization of the possibility of the valve to change between washing operation and foam operation from the outer end of the hose, regardless of the position in relation to the relevant station.

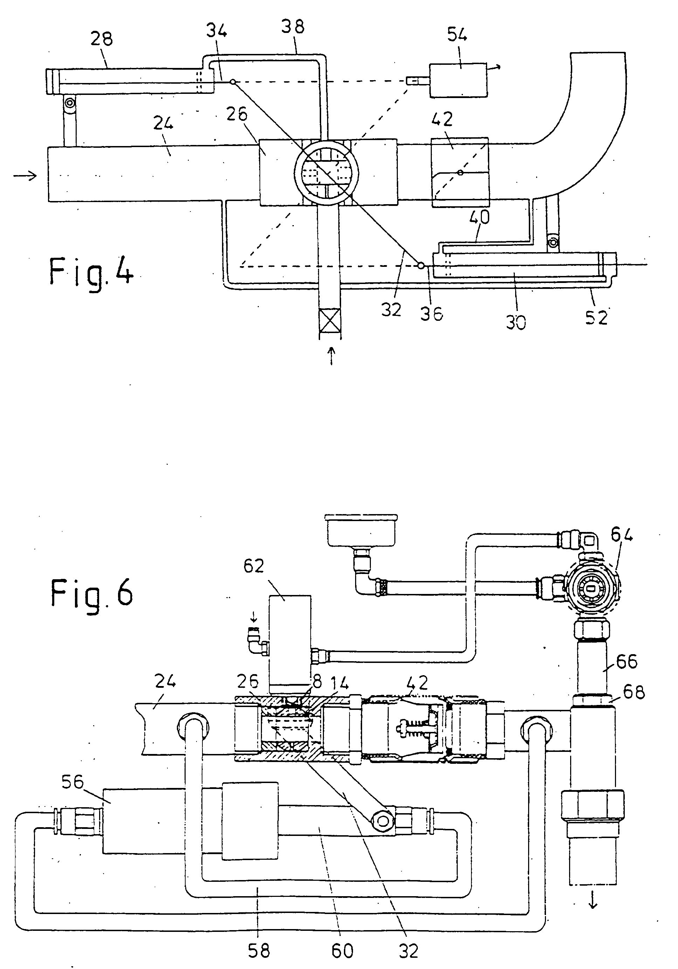

With reference to Fig. 4 of the drawing sanitary water is led through the pipe line 24 to the valve 26, as next to the station a valve is placed. For mounting and repair purposes said valve will be present anyway, such that the station can be mounted and serviced without having to shut down the entire installation.

The valve 26 is connected to two cylinders 28,30, more explicitly the valve element is connected to the piston rods 34,36 of said two cylinders by means of a connecting rod 32. The front end of the cylinder chamber of the cylinder 28 is connected to the valve by a pipe line 38 via an opening in the side of the valve house placed opposite the suction opening. The front end of the cylinder chamber of the other cylinder 30 is connected to the pipe line downstream the valve by a pipe 40, while the rear end of the chamber is connected to the pipe line upstream the valve by a pipe 52.

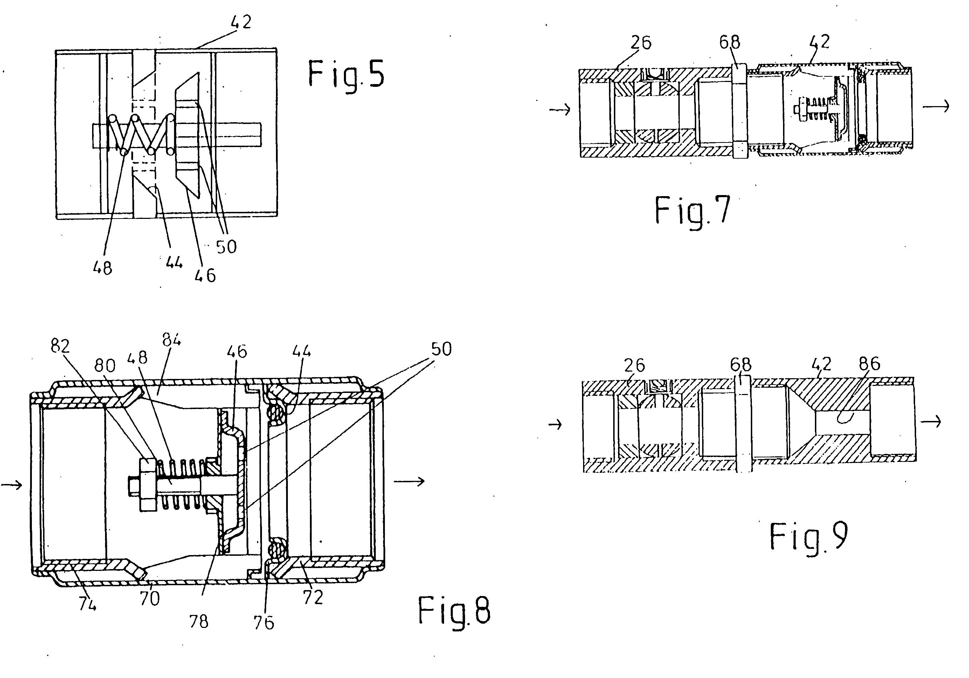

Just after, i.e. downstream the valve 26, but before the pipe connection 40 of the cylinder, a specially designed limiting valve 42 is inserted in the pipe line, and which can limit the liquid flow. The valve 42 comprises a conical valve seat 44, cf. Fig. 5 and a belonging valve element 46 spring loaded 48 to its opening position towards the liquid flow. In the valve element there are two passage holes 50, through which a limited liquid flow can pass when the valve element is in its closing position.

In washing operation the arrangement is in the position as shown in Fig. 4. At change to foam operation the washing nozzle is interchanged with a foam applicator and by activating the pistol/valve a large water flow is sent through the change valve 26, which is still in its washing position. The large water flow causes the limiting valve 42 to close, such that only the limited water flow remains through the passage in the valve member. This causes a large pressure drop from the inlet of the change valve 26 to the outlet of the limiting valve, which causes the cylinder 30 to switch, i.e. the piston is pressed to the top due to the pressure difference in the pipe lines 40,52 over the valves. The rod connection 32 will turn the valve member of the change valve to the suction position. The resulting reduced water flow through the valve 26 will cause the limiting valve 42 to reopen. At the end of the movement curve of the piston rod of the other hudraulic cylinder 28 there is a valve 54, which is activated by the rod for opening of compressed air to the pipe line. The station is thereby switched to its foam position. This position is indicated by a dotted line in Fig. 4.

One of the advantages of the equipment is that it automatically returns to its washing position when the foam operation is switched off. The pressure which is built up in the system when the pistol is shut off will influence on the cylinder 28 via the pipe line 38 and switch the valve to its washing position. The other cylinder 30 will act as a slave cylinder, as it is pressure neutral. There is the same pressure at either side of the piston. The foam operator is interchanged with a washing nozzle, and the equipment is switched to its washing position.

At temporary interruption of the foam operation the equipment will automatically change to the washing position, but by activating the pistol/valve, the equipment will automatically re-switch to the foam position as the foam applicator is applied. During foam operation one will not notice the temporary switches to the washing position, as it only occurs when the foam operation is temporarily interrupted.

The third operation mode is disinfection, where the change valve 26 also is used for suction, namely of disinfectant. The operation mode however presents one difficulty, as a disinfection nozzle with only a small water flow is applied. At the first start one can open the pistol/valve without the nozzle applied, thereby causing a large water flow, switching the equipment to the suction position, and after this the nozzle is mounted. In case the disinfection is interrupted, the equipment will automatically change to the washing position, but as the disinfection nozzle is applied, a large water flow is not present at restart as is the case in foam operation, which can switch the equipment to suction position. Instead of dismounting the valve each time, it can be designed with a side outlet for a large water flow, which can be activated at the start situation.

Constructionally the two cylinders can be placed at the same side or replaced by only one cylinder. An embodiment is shown in Fig. 6 of the drawing. The cylinder 56 is a differential cylinder having a suitable difference between the areas at either side of the piston, such that the pressure difference, taken from the area, is sufficient to cause the shifting of the valve 26. On the smallest area side of the piston, the cylinder is connected by a hose 58 to the pipe line 24 upstream the valve 26, and the other side of the cylinder is connected downstream the valve 26 and the limiting valve 42. The piston rod 60 of the cylinder is connected by a rod 32 to the valve member of the valve. In washing operation the piston is in its projected position. The admixing of air is controlled by an air valve 62, which is spring loaded to its shut off position, such that the compressed air is shut off during washing. In foam and disinfection positions the piston is in its retracted position. At interchanging from washing nozzle to foam applicator the limiting valve 42 will close. The pressure upstream the limiting valve 42, which is considerable higher than the pressure difference on the piston from the area, will urge the piston into its retracted position, and thereby shifting the valve 26 to its foam operation position.

At the same time the end of the connection rod 32 activates the pneumatic cylinder 62 for a flow of compressed air through a reduction valve 64, a counter valve 66 and finally through a nozzle 68 for mixing with the liquid flow for foaming of same. The reduction valve is also connected to a manometer. At reswitch to washing operation the pressure difference on the-piston displaces this to its projected position, and the air valve 62 will shut off the compressed air flow. It is realized that the equipment automatically will revert to washing position, which is start position. Disinfection is carried out as previously described by "cheating" the equipment with a valve at the disinfection nozzle.

The limiter valve 42 is shown schematically in Fig. 5 of the drawing. An embodiment of the valve is shown in detail in Fig. 7 of the drawing unified with a change valve by means of a body, such that the valves appear as a unit. The limiter valve, which is shown separately in Fig. 8 , comprises an outer mantel 70 with inserts 72,74 at both ends and having internal threads. In the outlet end there is a sleeve 76 with a groove for an O-ring which constitutes the valve seat 44. Between the sleeve and the end of the other insert there is embedded a finned grid 78, bearing the valve body 46 which is springloaded to its open position. The valve body having a central pin 80 fixed in the grid, around which is placed a helical spring 48 resting between the grid and the inwards facing side of a nut 82 on the end of the threaded pin 80. In the valve body there are holes 50 permitting passage of a minor liquid flow when the valve is in its closed position, i.e. when the valve body is resting on the valve seat, the body being guided in the grid structure. In case the valve body comprises a pair of discs with holes, which could be rotated in respect to each other, the flow passage could readily be adapted to the current situation.

In special circumstances it appears that a throttle valve may be used as a limiter valve. In Fig. 9 of the drawing is shown an embodiment also unified with a change-over valve in the same manner as shown in Fig. 7. However the intensive constriction causes a severe pressure drop across the valve, which is undesirable during washing operation. The function is the same as previously described. At interchange of the washing nozzle with the foam applicator, the liquid flow is increased considerably and the resulting pressure drop across the valve activates the cylinder which switches the change-over valve to its foam position.

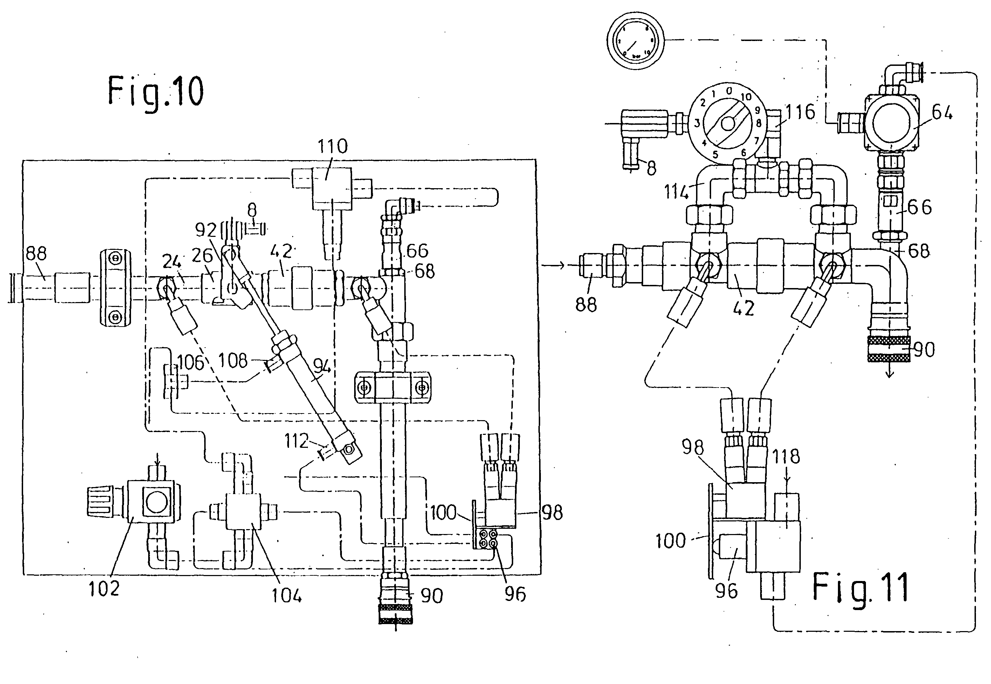

Though the required force for rotating the valve body 26 of the change-over valve is relatively small, a relatively large cylinder or cylinders are required due to the minor power in a low pressure cleaning equipment. Further, differental cylinders are relatively expensive. As compressed air always will be present, this could be utilized to activate the change-over valve, e.g. by means of a pneumatic cylinder and control this by the liquid flow/liquid pressure. An embodiment is shown in Fig. 10 of the drawing, where 88 indicates the inlet for sanitary water, while 90 indicates the liquid outlet having a snap coupling. Besides, 26 indicates the change-over valve and 42 the limiter valve as shown in Figs. 7 and 8. The hose connection of the change-over valve for inlet of cleaning detergent/disinfectant is indicated by 8. Liquid connections are indicated by intermitting lines, while compressed air connections are indicated by dot and dash lines. The valve body of the change-over valve is by a short arm linked to the piston rod of the pneumatic cylinder 94. Said cylinder 94 is controlled by a set of air switches 96, which is activated by a small hydraulic cylinder 98 connected to the pipe line 24 upstream the change-over valve and downstream the limiter valve 42 respectively, in the same manner as in the embodiment shown in Fig. 6. At the end of the hydraulic cylinders 98 piston rods there is a plate 100, which activates the air switches 96, of which the two topmost usually are shut off, while the two lowermost are open. The normal position of the station is its washing position. At change-over to foam application the liquid part acts as previously described, i.e. that the piston rod of the hydraulic cylinder 98 goes into its retracted position, activating the air switches. The upper air switch set opens, while the lower shuts off. Compressed air from the reduction valve 102 via a manifold 104 and the switches is led to a branch pipe 106, where the air is led to the cylinder 94 at 108 and presses the piston to its retracted position, whereby the change-over valve is rotated to its injection position. From the other branch of the branch pipe compressed air is led to a valve 110, from which compressed air is fed to the liquid through the counter valve 66 and nozzle 68 as previously. At reswitch to washing position or temporary shut off of foam application the liquid part acts as previously, i.e. the cylinder 98 returns to its initial projected position and activates the air switches, such that the upper set shuts off, while the lower opens. Compressed air will thus flow from the regulator via the manifold and the lower switches to the other end of the pneumatic cylinder at 112, whereby the piston is pushed out and the change-over valve rotates to washing position. As the air pressure at the same time is released from the compressed air activated air valve 110 the supply of compressed air to the liquid flow is disconnected. Disinfection takes place as previously described. The system functions as before, only a pneumatic cylinder is added as auxiliary for activating the change-over valve. An electrical linear actuator could as well be added.

A variant of the embodiment described above is shown in Fig. 11 of the drawing. Instead of the change-over valve there is a by-pass 114 across the limiter valve 42, of which the valve body by the way is without flow passage, i.e. the liquid flow is completly shut off when activated, such that the liquid flow is led through the by-pass, in which is placed a common injector 116 with a hose connection 8 for the suction hose. Across the limiter valve 42 is as previously placed a small hydraulic cylinder 98 with a plate 100 at the end of the piston rod, and which activates an air switch 98, which opens and shuts off the supply of compressed air 118. The station is shown in washing operation, where the supply of compressed air is shut off, and the water flows straight through the limiter valve 42. At shift to foam application the limiter valve reacts on the pressure build up and shuts off, whereby the water is led through the by-pass. The small hydraulic cylinder responds likewise on the pressure build up and the piston goes to its retracted position, whereby the air switches are activated by the plate to their open position, and compressed air is added to the liquid via the reduction valve 64, the counter valve 66 and the air nozzle 68. At reswitch to washing position the pressure drops across the limiter valve 42, and this opens, likewise the cylinder 98 returns to its normal position, the supply of compressed air is shut off. At temporary interruption of foam application the station will automatically return to its washing position. Disinfection takes place as previously described.

Thus according to the invention there is provided a cleaning equipment, where from the end of the hose one is able to switch between washing and foam operation. Furthermore the equipment offers the advantage that it automatically returns to its washing position. Another obvious advantage is the simple constructive design. Although the invention is described especially in connection with a stationary low pressure cleaning installation, it is obvious that the utilization of the invention is not limited thereto.

## Claims

1. A cleaning equipment, switchable between washing operation for washing with tap water and foam application with a cleaning agent mixed with the water via an injector system, and having interchangeable nozzles for the various operations connected to the equipment by a hose, **characterized in that** the injector system is constituted by a change-over valve with a rotary-symmetrical valve body (14) in a flow passage (4,6) of a valve housing (2), said valve body having two crossing channels, one having a relatively large cross section, and constitutes the washing channel (16), while the other has a minor cross section, and constitutes the injection channel (20,22), and the valve body (14) being rotatable between a position where the washing channel (16) is in alignment with the flow passage (4,6) of the valve housing for delivering water without addings, and a transverse position, where the washing channel is in connection with an adding intake (8) in the side of the valve housing for intake of adding agents, and where the injection channel (20,22) is in alignment with the flow passage (4,6) of the valve housing for procuring of an injection effect for suction of adding agents and mixing thereof into the water.

2. Cleaning equipment according to claim 1, **characterized in that** there is a check valve (10) in the adding agent inlet (8), for shutting off the inlet, when the change-over valve is in its washing operation position.

3. Cleaning equipment according to claim 2, **characterized in that** the part of the injection channel, which is at one side of the flow passage channel, and which constitutes the injector outlet (22) has a larger cross section than the part of the injection channel, which is at the other side of the flow passage channel, and which constitutes the injection inlet (20).

4. Cleaning equipment according to claims 1, 2 or 3, **characterized in that** it comprises a pressure or flow sensor (42), which senses the pressure or flow difference at interchange between washing nozzle and foam applicator and having a connection to the change-over valve, and where the valve body (14) is connected with pressure or flow actuating means (28,30,56,94) for switch between the two operation modes.

5. Cleaning equipment according to claim 4, **characterized in that** the pressure sensor comprises a flow limiter valve (42) in continuation of the change-over valve (26).

6. Cleaning equipment according to claim 5, **characterized in that** the valve body (46) of the limiter valve (42) is springloaded (48) for opening against the flow direction, and that in the valve body (46) there is a minor flow passage (50).

7. Cleaning equipment according to claim 4, **characterized in that** the actuating means (28,30,56,94), comprises two cylinders (28,30), one of which (30) by the bottom end is conntected to the pipe line upstream the valves (26,42) and the top end being connected to the pipe line downstream the valves, and that the top end of the other cylinder (28) is connected to the valve housing (2) opposite the suction opening.

8. Cleaning equipment according to claim 4, **characterized in that** the actuating means comprises one cylinder (56) (a differential cylinder), where the under side of the piston is larger than the upperside, and that the top end of the cylinder is connected to the pipe line upstream the valves (26,42) and the bottom end downstream said valves.

9. Cleaning equipment according to claims 7 or 8, **characterized in that** the cylinders during foam operation activate a valve for admixing compressed air to the liquid flow.

10. Cleaning equipment according to claim 8, **characterized in that** the valve body (14) of the change-over valve (26) is activated by a pneumatic cylinder (94), controlled by hydraulic cylinders (94) via control devices such as air switches and air valves.

## Patentansprüche

1. Reinigungsgerät, umschaltbar zwischen einem Waschbetrieb zum Waschen mit Leitungswasser und dem Auftragen von Schaum mit einem Reinigungsmittel, das über ein Einspritzsystem mit dem Wasser gemischt wird, welches für die verschiedenen Betriebsarten austauschbare Düsen hat, die mit dem Gerät durch einen Schlauch verbunden sind, **dadurch gekennzeichnet, daß** das Einspritzsystem durch ein Umschaltventil mit einem rotationssymmetrischen Ventilkörper (14) in einem Durchflußkanal (4, 6) eines Ventilgehäuses (2) gebildet wird, welcher Ventilkörper zwei sich kreuzende Kanäle hat, von welchen einer einen relativ großen Querschnitt hat und den Waschkanal (16) bildet, während der andere einen kleineren Querschnitt hat und den Einspritzkanal (20, 22) bildet, und wobei der Ventilkörper (14) zwischen einer Position, in der der Waschkanal (16) mit dem Durchflußkanal (4, 6) des Ventilgehäuses fluchtend ausgerichtet ist, um Wasser ohne Zusatzstoffe zu liefern, und einer Querposition drehbar ist, in der der Waschkanal in Verbindung mit einem Zugabeeinlaß (8) in der Seite des Ventilgehäuses zum Zugeben von Zusatzstoffen steht und in der der Einspritzkanal (20, 22) mit dem Durchflußkanal (4, 6) des Ventilgehäuses fluchtend ausgerichtet ist, um einen Einspritzeffekt zum Ansaugen von Zusatzstoffen und zum Beimischen derselben in das Wasser zu erzielen.

2. Reinigungsgerät nach Anspruch 1, **dadurch gekennzeichnet, daß** ein Rückschlagventil (10) in dem Zusatzstoffeinlaß (8) ist, um den Einlaß zu sperren, wenn das Umschaltventil in seiner Waschbetriebsposition ist.

3. Reinigungsgerät nach Anspruch 2, **dadurch gekennzeichnet, daß** der Teil des Einspritzkanals, der auf einer Seite des Durchflußkanals ist und der den Einspritzauslaß (22) bildet, einen größeren Querschnitt hat als der Teil des Einspritzkanals, der auf der anderen Seite des Durchflußkanals ist und der den Einspritzeinlaß (20) bildet.

4. Reinigungsgerät nach Anspruch 1, 2 oder 3, **dadurch gekennzeichnet, daß** es einen Druck- oder Durchflußsensor (42) enthält, der den Druck oder die Durchflußdifferenz beim Umwechseln zwischen der Waschdüse und der Schaumauftrageinrichtung erfaßt und eine Verbindung zu dem Umschaltventil hat, wobei der Ventilkörper (14) mit einer Druck- oder Durchflußbetätigungseinrichtung (28, 30, 56, 94) zum Umschalten zwischen den beiden Betriebsarten verbunden ist.

5. Reinigungsgerät nach Anspruch 4, **dadurch gekennzeichnet, daß** der Drucksensor ein Durchflußbegrenzungsventil (42) in Fortsetzung des Umschaltventils (26) umfaßt.

6. Reinigungsgerät nach Anspruch 5, **dadurch gekennzeichnet, daß** der Ventilkörper (46) des Begrenzungsventils (42) federbelastet (48) ist, um sich gegen die Flußrichtung zu öffnen, und daß in dem Ventilkörper (46) ein kleiner Durchflußkanal (50) ist.

7. Reinigungsgerät nach Anspruch 4, **dadurch gekennzeichnet, daß** die Betätigungseinrichtung (28, 30, 56, 94) zwei Zylinder (28, 30) enthält, von welchen einer (30) mit dem unteren Ende mit der Rohrleitung stromaufwärts der Ventile (26, 42) verbunden ist und mit dem oberen Ende mit der Rohrleitung stromabwärts der Ventile, und daß das obere Ende des anderen Zylinders (28) mit dem Ventilgehäuse (2) der Saugöffnung gegenüberliegend verbunden ist.

8. Reinigungsgerät nach Anspruch 4, **dadurch gekennzeichnet, daß** die Betätigungseinrichtung einen Zylinder (56) (einen Differenzzylinder) enthält, bei welchem die Unterseite des Kolbens größer ist als die Oberseite, und daß das obere Ende des Zylinders mit der Rohrleitung stromaufwärts der Ventile (26, 42) und das untere Ende stromabwärts der Ventile verbunden ist.

9. Reinigungsgerät nach Anspruch 7 oder 8, **dadurch gekennzeichnet, daß** die Zylinder während des Schaumbetriebes ein Ventil zur Beimischung von Druckluft zu dem Flüssigkeitsstrom betätigen.

10. Reinigungsgerät nach Anspruch 8, **dadurch gekennzeichnet, daß** der Ventilkörper (14) des Umschaltventils (26) durch einen Druckluftzylinder (94) betätigt wird, gesteuert von Hydraulikzylindern (94) über Steuereinrichtungen, wie z.B. Luftschalter und Luftventile.

## Revendications

1. Equipement de nettoyage, pouvant être commuté entre une opération de lavage pour laver avec l'eau du robinet et une application de mousse avec un agent de nettoyage mélangé avec l'eau via un système d'injecteur, et ayant des buses interchangeables pour les différentes opérations reliées à l'équipement par un tuyau,
**caractérisé en ce que** le système d'injecteur est constitué par une valve de commutation avec un corps de valve symétrique en rotation (14) dans un passage d'écoulement (4, 6) d'un boîtier de valve (2), ledit corps de valve ayant deux canaux transversaux, l'un ayant une section transversale relativement grande, et constitue le canal de lavage (16), tandis que l'autre présente une petite section transversale et constitue le canal d'injection (20, 22), et le corps de valve (14) pouvant être tourné entre une position où le canal de lavage (16) est en alignement avec le passage d'écoulement (4, 6) du boîtier de valve pour distribuer de l'eau sans additifs, et une position transversale, où le canal de lavage est en liaison avec une amenée d'additifs (8) dans le côté du boîtier de valve pour amener des agents additifs, et où le canal d'injection (20, 22) est en alignement avec le passage d'écoulement (4, 6) du boîtier de valve pour produire un effet d'injection pour l'aspiration d'agents additifs et le mélange de ceux-ci dans l'eau.

2. Equipement de nettoyage selon la revendication 1,
**caractérisé en ce qu'**il existe un clapet de retenue (10) dans l'entrée (8) d'agents additifs, pour fermer l'entrée, quand la valve de commutation est dans sa position opératoire de lavage.

3. Equipement de nettoyage selon la revendication 2,
**caractérisé en ce que** la partie du canal d'injection, qui est d'un côté du canal du passage d'écoulement, et qui constitue la sortie d'injecteur (22), présente une section transversale plus grande que la partie du canal d'injection, qui est de l'autre côté du canal de passage d'écoulement, et qui constitue l'entrée d'injection (20).

4. Equipement de nettoyage selon la revendication 1, 2 ou 3,
**caractérisé en ce qu'**il comprend un capteur de pression ou d'écoulement (42), qui détecte la différence de pression ou d'écoulement au niveau de l'échange entre la buse de lavage et l'applicateur de mousse, et ayant une liaison à la valve de commutation, et où le corps de valve (14) est relié à des moyens d'actionnement de pression ou d'écoulement (28, 30, 56, 94) pour commuter entre les deux modes opératoires.

5. Equipement de nettoyage selon la revendication 4,
**caractérisé en ce que** le capteur de pression comprend une valve de limitation d'écoulement (42) en continuation avec la valve de commutation (26).

6. Equipement de nettoyage selon la revendication 5,
**caractérisé en ce que** le corps de valve (46) de la valve de limitation (42) est chargé par ressort (48) pour s'ouvrir à l'encontre du sens d'écoulement, et **en ce que**, dans le corps de valve (46), il est prévu un petit passage d'écoulement (50).

7. Equipement de nettoyage selon la revendication 4,
**caractérisé en ce que** les moyens d'actionnement (28, 30, 56, 94) comprennent deux vérins (28, 30), dont l'un (30) par l'extrémité de fond est relié à la conduite en amont des valves (26, 42) et l'extrémité supérieure est reliée à la conduite en aval des valves, et **en ce que** l'extrémité supérieure de l'autre vérin (28) est reliée au boîtier de valve (2) opposé à l'ouverture d'aspiration.

8. Equipement de nettoyage selon la revendication 4,
**caractérisé en ce que** les moyens d'actionnement comprennent un vérin (56) (un vérin différentiel), où le dessous du piston est plus grand que le dessus, et **en ce que** l'extrémité supérieure du vérin est reliée à la conduite en amont des valves (26, 42) et l'extrémité inférieure en aval desdites valves.

9. Equipement de nettoyage selon les revendications 7 ou 8,
**caractérisé en ce que** les vérins, pendant le fonctionnement à mousse, activent une valve pour mélanger de l'air comprimé à l'écoulement liquide.

10. Equipement de nettoyage selon la revendication 8,
**caractérisé en ce que** le corps de valve (14) de la valve de commutation (26) est activé par un vérin pneumatique (94) commandé par des vérins hydrauliques (94) via des dispositifs de commande tels que des commutateurs et des valves pneumatiques.
